# EUROPEAN PATENT APPLICATION

(11) **EP 1 241 840 A2**
(43) Date of publication of application: **18.09.2002**
(21) Application number: 02251105.9
(22) Date of filing: 19.02.2002
(51) Int. Cl.: H04L 12/56

(54) **Allocating traffic between a plurality of paths in a communications network**

(30) Priority: 16.03.2001 US 810802
(71) Applicant: Nortel Networks Limited, St. Laurent, Quebec H4S 2A9 (CA)
(72) Inventor: Davies, Elwyn B., Ely, Cambridgeshire CB7 5AW (GB)
(74) Representative: Christophers, Rachel, Dr.

(57) **Abstract**

Consider a path between two nodes in a communications network. This path (which may be physical or logical) has a finite bandwidth or size. For particular types of communications network, such paths are manufactured and provided with standard bandwidths or sizes. When the amount of traffic between the two nodes along a single path exceeds the standard bandwidth, it is necessary to provide one or more additional paths between the two nodes. It is then necessary to distribute or allocate incoming traffic between the multiple possible paths and to do this in a manner which preserves the order of packets within particular flows of traffic. This is achieved by using flow labels of packets and inputting those flow labels into a hash function. The flow labels are preferably chosen pseudo randomly, or randomly, as well as uniformly from a specified range of values. The hash function results are bucketed and one bucket associated with each possible path. Any packet whose hash value falls into the hash bucket for a path is dispatched along that path. All the packets within a particular flow are given the same flow label and in this way, the order of packets within a particular flow is preserved.

## Description

### FIELD OF THE INVENTION

The present invention relates to a method and apparatus for allocating traffic between a plurality of paths. The invention is particularly relevant, but in no way limited to, load balancing between multiple links in a internet protocol communications network.

### BACKGROUND TO THE INVENTION

Consider a path between two nodes in a communications network. This path (which may be physical or logical) has a finite bandwidth or size. For particular types of communications network, such paths are manufactured and provided with standard bandwidths or sizes. For example, interfaces between electrical and optical regions of modern communications networks are expected to comprise paths with standard bandwidths of either 2.4 Gbps or 10 Gbps. At a given epoch, there is an effective maximum bandwidth for such paths determined either by commercial considerations or technical possibilities. One path of a standard size can then be thought of as a quantum, since it would not be possible to replace the path with a single one of greater bandwidth at this epoch. When the traffic between the two nodes along a single path exceeds that quantum, it is necessary to provide one or more additional quanta or paths between the two nodes. As a result, a plurality of paths between the same pair of nodes results and these paths can be referred to as "parallel" paths. These paths may not necessarily be of the same length and may comprise different numbers of routers or other nodes themselves.

At the node at which the parallel paths originate, it is then necessary to distribute or allocate incoming traffic, intended to travel over the said paths, between the parallel paths as evenly as possible. Previously, this has been done for example, using a "round-robin" type method, where items of incoming traffic are allocated to each of the parallel paths in turn. This method is problematic because traffic packets which are associated with a flow of traffic between two application end points may become reordered as a result of being allocated between parallel paths and transmitted along those paths. In situations where the order of the items of traffic is particularly important, such as streaming video or audio, or connections using the TCP protocol, significant mis-ordering is detrimental to the goodput of the service being provided. To counteract this, buffering may be used, to buffer the traffic at the ends of the parallel paths and allow an attempt to be made to re-order the traffic. However, buffers are limited and cannot counteract the effects of severe mis-ordering.

Other methods have involved using 5-tuple (destination address, source address, protocol number and source/destination transport numbers) information as described below. This method is generally unable to provide an even distribution of the traffic across the parallel paths because the sets of 5-tuples associated with the path at any moment are not distributed according to any pre-ordained statistical distribution, and the areas of concentration vary with time, making it difficult to select a suitable hash function. In addition some packets will not have visible transport port numbers either because they are not associated with a transport protocol or because the payload has been encrypted.

The term, "flow" is used herein to refer to a sequence of packets sent from a particular source to a particular destination and where the packets are all associated with a particular application. For example, the packets may all be associated with a video service, an audio service or any other suitable application. The term, "microflow" is used to refer to a single instance of an application to application sequence of packets which is identified by source address, source port, destination address, destination port and protocol id.

The term, "flow label" has been introduced in Internet Protocol version 6 (IPv6) as being a 20 bit field in the IPv6 header. In IPv6 the flow label field is provided in order to enable a source to label sequences of packets for which it requires special handling by the IPv6 routers, such as non-default quality of service, or "real time" service. However, the term, "flow label" is used herein to refer to any identifier associated with packets which enables all packets in the same flow to be identified. Thus, an IPv6 flow label, is one example of many possible types of flow label.

It is accordingly an object of the present invention to provide a method of allocating traffic between a plurality of paths in a communications network which overcomes or at least mitigates one or more of the problems noted above.

Further benefits and advantages of the invention will become apparent from a consideration of the following detailed description given with reference to the accompanying drawings, which specify and show preferred embodiments of the invention.

### SUMMARY OF THE INVENTION

According to a first aspect of the present invention there is provided a method of allocating traffic between a plurality of paths in a communications network. The paths are each between a particular pair of nodes, and the traffic comprises packets. Each packet is a member of one of a plurality of flows and comprises a flow label. The method comprises allocating the packets between the paths on the basis of the flow labels. Given the statistical distribution function of the flow labels and suitable choice of hash function, the traffic can be allocated proportionately to the bandwidth of the available paths. This provides the advantage that, by using the flow labels to allocate traffic, mis-ordering of the packets as a result of the allocation is reduced. The paths may be of different lengths and comprise different numbers of routers or other nodes. Because of this, if packets from a single flow are allocated to different paths, the order of those packets in space and time is not preserved. However, by using flow labels to allocate packets between the paths, this problem is avoided.

Preferably, all the packets within the same flow have the same flow label. This enables the method to be arranged such that substantially all packets within the same flow are allocated to the same path. This ensures the order of the packets within that particular flow is preserved. Other items of traffic, not from the particular flow, may be interspersed on the path with the packets from the particular flow, but this does not lead to mis-ordering.

Preferably, the flow labels are selected from a pre-specified range of values in a substantially random manner such as a pseudo random manner or an actual random manner. The flow labels are preferably also selected such that they substantially fit a specified form of statistical distribution, such as a uniform distribution. By selecting the flow labels in this manner, statistical properties of the flow label distrtibution are known and this knowledge can be exploited in the method for allocating traffic in order to enable traffic to be substantially evenly distributed between the paths.

Preferably the method further comprises applying a hash function to the flow labels and allocating the packets between the paths on the basis of the results of the hash function. The term "hash function" is used to refer to a method of assigning numbers in a seemingly random fashion to strings, where a string may be a sequence of bits. Using a hash function there is no general way of predicting what number will be assigned to a particular string by analysing values assigned to similar strings. However, a particular string is always associated with the same number. Using a hash function, a number is generated from each packet's flow label. A particular range of these numbers is then assigned to each path and in this way packets are allocated to the paths.

The paths described herein may be either physical paths or logical paths and the packets are preferably internet protocol packets such as internet protocol version 6 packets.

According to another aspect of the present invention there is provided an apparatus for allocating traffic between a plurality of paths in a communications network comprising at least two nodes, said paths each being between the same pair of nodes, and wherein said traffic comprises packets, each packet being a member of a flow and comprising a flow label, said apparatus comprising a processor arranged to allocate the packets between the paths on the basis of the flow labels.

According to another aspect of the present invention there is provided a computer program arranged to control an apparatus for allocating traffic between a plurality of paths in a communications network comprising at least two nodes, said paths each being between the same pair of nodes, and wherein said traffic comprises packets, each packet being a member of a flow and comprising a flow label, said computer program being arranged to control the apparatus such that it allocates the packets between the paths on the basis of the flow labels.

The preferred features may be combined as appropriate, as would be apparent to a skilled person, and may be combined with any of the aspects of the invention.

### BRIEF DESCRIPTION OF THE DRAWINGS

In order to show how the invention may be carried into effect, embodiments of the invention are now described below by way of example only and with reference to the accompanying figures in which:
Figure 1 is a schematic diagram of a communications network according to the prior art;
Figure 2 is a flow diagram of a method of allocating traffic between a plurality of paths in a communications network.
Figure 3 is a schematic diagram of a communications network comprising an apparatus for allocating traffic between a plurality of paths in the communications network.

### DETAILED DESCRIPTION OF INVENTION

Embodiments of the present invention are described below by way of example only. These examples represent the best ways of putting the invention into practice that are currently known to the Applicant although they are not the only ways in which this could be achieved.

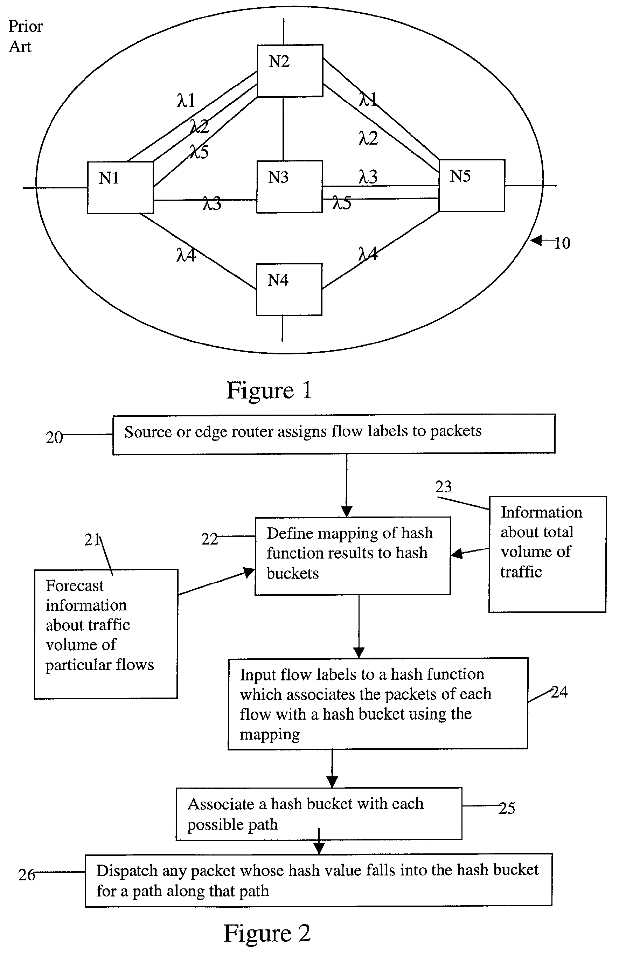

Figure 1 is a schematic diagram of a communications network according to the prior art. The communications network 10 comprises nodes, N1 to N5, which are connected by links. For example, any or all of the links or nodes could be electrical or optical. In a particular example, the links are optical with electrical interfaces at each node, and the nodes are all electrical. In the future, some or all of the nodes may themselves be completely optical. Considering two of the nodes, N1 and N5, at least five possible paths between nodes N1 and N5 are shown and these paths are labelled lambda 1 to lambda 5 in the diagram. Each 'lambda' may be carried on a separate optical fibre or as a 'wavelength' as a component of a wavelength division multiplexing scheme which allows many wavelengths (currently up to 160) to be carried with minimal interaction on a single fibre. In either case the bandwidth available is quantised with the maximum capacity of each lambda being typically 10Gbps. As explained above these five paths are termed "parallel" paths between N1 and N5, even though they may be of different lengths and comprise different numbers of intermediate nodes. For example, path lambda 1 comprises only one intermediate node N2 whilst path lambda 5 comprises two intermediate nodes, N2 and N3. Each parallel path is considered as being able to carry one quantum of traffic as explained above. For example, at the interface between an electrical and an optical region of a communications network such a quantum is likely to be 2.4 giga bits per second (Gbps) or 10Gbps. In the core of today's internet networks the quantum is likely to be that provided by Nortel Networks OC-48 and OC-192 products which are currently commercially available.

If the amount of traffic to be passed between N1 and N2 is greater than one quantum, then the traffic needs to be allocated between the parallel paths. However, as explained above, it is required to do this in such a manner that the traffic is relatively evenly distributed between the paths and such that the order of packets in particular flows is not significantly disrupted. Another way of expressing this is to say that it is required to achieve reasonable "goodput" as opposed to just "throughput" of traffic between nodes N1 and N2. The term "goodput" is used to mean that the traffic should be passed between nodes N1 and N2 in such a manner that the output is useful for an application which requires that traffic. In order to obtain "goodput" the order of the packets within a particular flow needs to be preserved in addition to successful transfer of packets between nodes N1 and N2. Whilst most transport protocols used in internet protocol networks are immune to a limited amount of occasional packet re-ordering, continued and major re-ordering remains a significant problem. For example, significant re-ordering for (Transport Control Protocol) TCP flows reduces goodput to virtually zero because continual retransmissions are required. Similar problems arise for data gram protocols such as (Universal Datagram Protocol) UDP which rely on the application which sends and receives the traffic flow to deal with misordering. For particular applications such as streaming video or audio, significant misordering can completely destroy the application level view unless excessive buffering is provided.

Previously, it has been sought to allocate traffic between the parallel paths by using 5-tuples. As explained above, traffic can be thought of as comprising a plurality of flows, each flow being a sequence of packets sent from a particular source to a particular destination and where the packets are all associated with a particular application. In order to identify flows, a 5-tuple, or five items of information are normally used. These five items of information are the source address, source port, destination address, destination port and protocol identity. Previously, traffic has been allocated between parallel paths by using a hash function to convert the 5-tuple of each packet into a number. Pre-specified subsets or ranges of these numbers are associated with each parallel path, and the packets allocated to the parallel path for which their hash function number corresponds. However, this method does not enable the amounts of traffic allocated between parallel paths to be adequately controlled. We have recognised this problem and realised that it occurs because the set of 5-tuples observed varies with time in an unpredictable way which is not evenly distributed due to the bursty nature of traffic observed in practice (at most time scales, up to hours). In addition, the 5-tuple method is also problematic because of the unknown distribution of the 5-tuples, the time varying nature of the distribution of 5-tuples and the possible invisibility or non-appearance of port fields which are required for the 5-tuple method.
By using flow labels instead of 5-tuples we have enabled the amounts of traffic allocated between parallel paths to be more effectively controlled. The flow labels also enable us to preserve the ordering of packets within flows. Figure 2 is a flow diagram of the method we have developed.

The term, "flow label" has been defined above and these flow labels may be assigned to packets within a flow, either by the flow's source node or by an edge router fitted with a suitable classifier as is known in the art and described in Internet Engineering Task Force request for comments (IETF RFC) 2475. In IPv6 new flow labels must be chosen (pseudo-) randomly and uniformly from the range 1 to FFFFF hexadecimal. As explained above, these flow labels in IPv6 are used to allow routers that forward the packets to access flow state related information which controls the quality of service treatment of the packets at the routers. In the present invention, any suitable type of flow label may be used, and these flow labels are preferably chosen pseudo randomly, or randomly, as well as uniformly from a specified range.

Referring to Figure 2, the source of a flow or an edge router first assigns flow labels to packets (see box 20 of Figure 2). This is done such that all packets within the same flow have the same flow label and such that the flow labels are chosen pseudo randomly, or randomly as well as uniformly from a specified range. At node N1, a processor examines the flow labels of each packet. These flow labels are input to a suitable hash function that associates the packets of each flow with a hash bucket (see box 24 of Figure 2). Each hash bucket is in turn associated with one of the paths between N1 and N5 (see box 25 of Figure 2). Any packet whose hash value falls into the hash bucket for a path is dispatched along that path (see box 26 of Figure 2).

Where there is a sufficiently large number of different flows (as would be likely on an internet protocol trunk that fills more than one OC-48 or OC-192 path) then the uniform distribution of the flow labels results in a closely proportionate amount of traffic on each of the paths according to the proportion of the total hash space associated with each hash bucket. Thus by controlling the form of the hash buckets the proportion of traffic on the different paths can be adjusted. Forecast information about the volume of particular flows, available from admission control or user requests, can then be used to adjust the hash buckets accordingly (see box 21 of Figure 2). For example, if the total volume of traffic drops such that some of the paths are no longer required, then the hash bucket mapping can be changed to prevent use of one or more of the paths (see box 23 of Figure 2). This "frees up" those paths for other purposes.

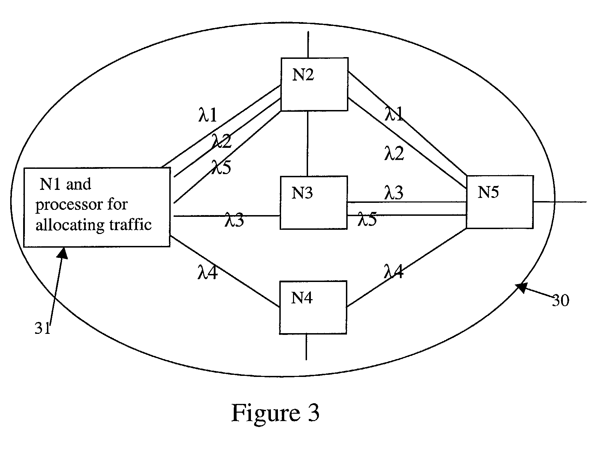

Figure 3 is the same as Figure 1, except that the communications network 30 comprises a processor for carrying out the method of Figure 2 and allocating traffic between paths. This processor may be incorporated into node N1 as illustrated in Figure 1 or may be located elsewhere as long as it is able to control and communicate with N1.

Any range or device value given herein may be extended or altered without losing the effect sought, as will be apparent to the skilled person for an understanding of the teachings herein.

## Claims

1. A method of allocating traffic between a plurality of paths in a communications network comprising at least two nodes, said paths each being between the same pair of nodes, and wherein said traffic comprises packets, each packet being a member of a flow and comprising a flow label, said method comprising allocating the packets between the paths on the basis of the flow labels.

2. A method as claimed in claim 1 wherein all the packets within a particular flow have the same flow label.

3. A method as claimed in claim 2 wherein said method is arranged such that in use, substantially all packets with the same flow label are allocated to the same path.

4. A method as claimed in claim 1 wherein said flow labels are selected from a pre-specified range of values in a pseudo random manner.

5. A method as claimed in claim 4 wherein said flow labels are selected such that the selected flow labels substantially fit a specified form of distribution.

6. A method as claimed in claim 5 wherein said form of distribution is a uniform distribution.

7. A method as claimed in claim 1 wherein the packets are allocated between the paths such that all the packets from the same flow are allocated to the same path.

8. A method as claimed in any preceding claim which further comprises applying a hash function to the flow labels and allocating the packets between the paths on the basis of the results of the hash function.

9. A method as claimed in claim 8 which further comprises specifying a range of hash result values for each of the paths.

10. A method as claimed in claim 9 wherein said ranges are specified on the basis of information about the total volume of traffic.

11. A method as claimed in claim 9 wherein said ranges are specified on the basis of forecast information about the volume of particular flows.

12. A method as claimed in any preceding claim wherein said paths are physical paths.

13. A method as claimed in any preceding claim wherein said paths are logical paths.

14. A method as claimed in any preceding claim wherein said packets are internet protocol packets.

15. A method as claimed in any preceding claim wherein the paths are associated with an interface between an electrical region and an optical region of the communications network.

16. An apparatus for allocating traffic between a plurality of paths in a communications network comprising at least two nodes, said paths each being between the same pair of nodes, and wherein said traffic comprises packets, each packet being a member of a flow and comprising a flow label, said apparatus comprising a processor arranged to allocate the packets between the paths on the basis of the flow labels.

17. An apparatus as claimed in claim 16 which is a communications network node suitable for use within the core of a communications network.

18. A communications network comprising an apparatus as claimed in claim 16.

19. A communications network as claimed in claim 18 which comprises an electrical region and an optical region.

20. A computer program arranged to control an apparatus for allocating traffic between a plurality of paths in a communications network comprising at least two nodes, said paths each being between the same pair of nodes, and wherein said traffic comprises packets, each packet being a member of a flow and comprising a flow label, said computer program being arranged to control the apparatus such that it allocates the packets between the paths on the basis of the flow labels.
